(19) Europäisches Patentamt
European Patent Office
Office européen des brevets

(11) **EP 2 322 574 A1**

(12) **EUROPEAN PATENT APPLICATION**
published in accordance with Art. 153(4) EPC

(43) Date of publication:
**18.05.2011 Bulletin 2011/20**

(51) Int Cl.:
*C08L 23/26* <sup>(2006.01)</sup>    *B29C 45/00* <sup>(2006.01)</sup>
*B29C 49/00* <sup>(2006.01)</sup>    *C08J 5/18* <sup>(2006.01)</sup>
*C08J 9/00* <sup>(2006.01)</sup>    *C08K 3/00* <sup>(2006.01)</sup>
*C08K 5/00* <sup>(2006.01)</sup>    *C08L 23/00* <sup>(2006.01)</sup>
*B29K 23/00* <sup>(2006.01)</sup>    *B29K 96/02* <sup>(2006.01)</sup>
*B29K 105/04* <sup>(2006.01)</sup>

(21) Application number: **09809937.7**

(22) Date of filing: **26.08.2009**

(86) International application number:
**PCT/JP2009/064853**

(87) International publication number:
**WO 2010/024286 (04.03.2010 Gazette 2010/09)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **01.09.2008 JP 2008223259**

(71) Applicant: **Mitsui Chemicals, Inc.**
**Tokyo 105-7117 (JP)**

(72) Inventors:
  • **TANAKA, Hirokazu**
  **Sodegaura-shi**
  **Chiba 299-0265 (JP)**

  • **ONOGI, Takayuki**
  **Sodegaura-shi**
  **Chiba 299-0265 (JP)**
  • **OOCHI, Hiroyasu**
  **Sodegaura-shi**
  **Chiba 299-0265 (JP)**
  • **IKENAGA, Shigenobu**
  **Sodegaura-shi**
  **Chiba 299-0265 (JP)**

(74) Representative: **HOFFMANN EITLE**
**Patent- und Rechtsanwälte**
**Arabellastraße 4**
**81925 München (DE)**

(54) **IONOMER RESIN, RESIN COMPOSITIONS CONTAINING SAME AND USES OF BOTH**

(57)    [Problem] To provide an ionomer resin capable of forming a polyolefin molded product having well-balanced two properties of molding processability and mechanical property, a resin composition including the ionomer resin and a molded product formed from the ionomer resin or the resin composition. [Solution to problem] An ionomer resin (X1) formed from 100 parts by weight of (A) an olefin polymer having constitutional units derived from an α-olefin of 2 to 20 carbon atoms and having a functional group (a) and 0.01 to 100 parts by weight of (B) a metal salt having two or more functional groups (b).

Fig. 1

**Description**

Technical Field

The present invention relates to an ionomer resin and a resin composition comprising the resin. More particularly, the present invention relates to an ionomer resin having been improved in elongational viscosity and a resin composition comprising the resin. The ionomer resin and the resin composition of the present invention are favorably used for blow molded articles and molded foam articles or as resin modifiers or the like.

Background Art

Polypropylene generally has lower melt viscosity than polyethylene and is known as a material which does not exhibit "strain hardening property" such that when monoaxial elongation deformation is given, viscosity increases together with strain. On the other hand, in a specific molding method, such as blow molding, foam molding or vacuum forming, a material exhibiting strain hardening property is thought to be preferable from the viewpoint of molding processability. In this sense, polypropylene is regarded as a material unsuitable for blow molding, foam molding, vacuum forming, etc., and in the existing circumstances, this is an obstacle to development of use application to the field of materials obtained by the molding method.

In order to solve this problem, various attempts to impart strain hardening property to polypropylene have been made so far. For example, (1) a method comprising adding an ethylene ionomer resin (patent literatures 1 and 2), (2) a method comprising adding ultrahigh-molecular weight polyethylene (patent literature 3) and (3) a method comprising introducing a long chain branch into a polypropylene main chain by the use of a peroxide, irradiation with electron rays or the like (patent literatures 4 to 6) are well known.

As the ethylene ionomer resin for use in the method (1) among the above methods, a compound having a structure wherein a part of carboxylic acid groups in a copolymer of ethylene and an ethylenically unsaturated carboxylic acid or its anhydride are neutralized with metal ions is known (patent literatures 1 and 2). Addition of such an ethylene ionomer resin to polypropylene makes it possible to impart strain hardening property to the polypropylene.

However, because of low compatibility of polypropylene with the ethylene ionomer resin, phase separation takes place in the resulting molded product, and therefore, there resides a problem that the balance of mechanical properties, particularly rigidity, ductility, impact resistance, etc., is markedly lowered.

Also in the method (2), there resides a problem that the balance of mechanical properties is impaired because of low compatibility of polypropylene with the ultrahigh-molecular weight polyethylene, similarly to the above method, though it is possible to impart strain hardening property.

In the method (3), there reside the following problems. When a peroxide is used, decomposition of a polypropylene main chain proceeds with introduction of a branched structure, and as a result, there occur a problem of marked lowering of mechanical strength as a molded product, a food hygienic problem due to odor derived from a peroxide and an undecomposed peroxide residue, etc. When irradiation with electron rays is used, there occur problems that a large-scale apparatus becomes necessary, mechanical strength is lowered with decrease of crystallinity due to introduction of a branched structure, and recycling is difficult.

Under such circumstances as above, in order to solve the problem of low compatibility of polypropylene with the ethylene ionomer resin in the method (1), an attempt to produce a propylene ionomer resin has been made (patent literatures 7 and 8). In the patent literatures 7 and 8, it is disclosed that according to the methods described in these literatures, a propylene ionomer resin is obtained by grafting an acid anhydride onto polypropylene and neutralizing a part of the acid anhydride with an organic acid metal salt, such as zinc acetate, sodium carbonate or sodium lactate, and that this ionomer resin exhibits strain hardening property.

The propylene ionomer resin obtained as above lacks for mechanical strength when it is used alone because the molecular weight is too low. From the viewpoint of practical use, it is desirable to add a small amount of the ionomer resin to usual polypropylene prior to use. However, addition of a small amount of the ionomer resin is insufficient to impart satisfactory strain hardening property to polypropylene, and the effect is small. In contrast therewith, if the ionomer resin is added in such a large amount that the stain curability is exhibited, there occurs a problem that the mechanical strength is lowered.

Citation List

Patent Literature

Patent literature 1: JP-B 1964-6810
Patent literature 2: JP-B 1965-15769
Patent literature 3: JP-B 1993-79683
Patent literature 4: JP-A 1984-93711
Patent literature 5: JP-A 1986-152754
Patent literature 6: JP-A 1987-121704
Patent literature 7: JP-T 2002-543251
Patent literature 8: JP-T 2006-521424

Summary of Invention

Technical Problem

The present invention relates to an ionomer resin, a resin composition comprising the resin and uses of them. In particular, it is an object of the present invention to provide an ionomer resin which not only has satisfactory heat resistance, balance of mechanical properties, chemical resistance, lightweight properties and recycling properties but also can exhibit strain hardening property that is advantageous in a molding method, such as blow molding, foam molding or vacuum forking, more efficiently and more conspicuously as compared with the conventional techniques, that is, an ionomer resin having been improved in elongational viscosity. It is another object of the present invention to provide a resin composition comprising the ionomer resin and a molded product which is obtained from the resin or the resin composition and is excellent in various properties. In the present invention, the "ionomer resin" refers to a resin comprising, as essential components, a polymer having a functional group (polar group) and a salt having a metal component.

Solution to Problem

In order to solve the above problems, the present inventors have earnestly studied. As a result, the present inventors have found that by the use of an ionomer resin formed from a polymer having a functional group and a specific metal salt, elongational viscosity of the resin is improved, and they have accomplished the present invention. That is to say, the present invention relates to the following matters (1) to (17).

(1) An ionomer resin (X1) formed from 100 parts by weight of (A) an olefin polymer having constitutional units derived from an $\alpha$-olefin of 2 to 20 carbon atoms and having a functional group (a) and 0.01 to 100 parts by weight of (B) a metal salt having two or more functional groups (b).

(2) The ionomer resin (X1) as stated in (1), wherein the functional group (a) is an acid group or an acid anhydride group.

(3) The ionomer resin (X1) as stated in (1) or (2), wherein the functional groups (b) have been formed by the neutralization of at least one selected from organic acid groups and inorganic acid groups with a metal component.

(4) The ionomer resin (X1) as stated in any one of (1) to (3), wherein the polymer (A) is a graft-modified product of an olefin (co)polymer (A-1) obtained by (co)polymerizing at least one selected from $\alpha$-olefins of 2 to 20 carbon atoms.

(5) The ionomer resin (X1) as sta ted in (4), wherein the olefin (co) polymer (A-1) is a propylene polymer in which the content of repeating units derived from propylene is not less than 50% by mol.

(6) The ionomer resin (X1) as stated in (4), wherein the olefin (co)polymer (A-1) is a 4-methylpentene-1 polymer in which the content of repeating units derived from 4-methylpentene-1 is not less than 50% by mol.

(7) The ionomer resin (X1) as stated in any one of (1) to (6), wherein the content of the functional group (a) in the polymer (A) is in the range of 0.01 to 50% by weight.

(8) A resin composition (X2) obtained by mixing the ionomer resin (X1) as stated in any one of (1) to (7) with at least one olefin polymer (C) which is different from the polymer (A).

(9) The resin composition (X2) as stated in (8), which is obtained by mixing the ionomer resin (X1) with the olefin polymer (C) in a ratio of 1:99 to 99:1 ((X1):(C), % by weight).

(10) The resin composition (X2) as stated in (8) or (9), wherein the polymer (C) is a homopolymer obtained by homopolymerizing an $\alpha$-olefin of 2 to 20 carbon atoms or a copolymer obtained by copolymerizing two or more different $\alpha$-olefins of 2 to 20 carbon atoms.

(11) The resin composition (X2) as stated in any one of (8) to (10), wherein the weight fraction of the polymer (C) is in the range of 1 to 99% by weight.

(12) A molded product obtained from the ionomer resin (X1) as stated in any one of (1) to (7) or the resin composition (X2) as stated in any one of (8) to (11).

(13) A blow molded product obtained from the ionomer resin (X1) as stated in any one of (1) to (7) or the resin composition (X2) as stated in any one of (8) to (11).

(14) A foamed product obtained from the ionomer resin (X1) as stated in any one of (1) to (7) or the resin composition (X2) as stated in any one of (8) to (11).

(15) The foamed product as stated in (14), wherein the open-cell ratio is not less than 50%, the average diameter of cells is not less than 100 $\mu$m but not more than 1 mm, and the average diameter of holes by which cells are interconnected is not less than 100 nm.

(16) An injection molded product obtained from the ionomer resin (X1) as stated in any one of (1) to (7) or the resin composition (X2) as stated in any one of (8) to (11).

(17) A film obtained from the ionomer resin (X1) as stated in any one of (1) to (7) or the resin composition (X2) as stated in any one of (8) to (11).

Advantageous Effects of Invention

According to the present invention, an ionomer resin which not only has satisfactory heat resistance, balance of mechanical properties, chemical resistance, lightweight properties and recycling properties but also can exhibit strain hardening property that is advantageous in a molding method, such as blow molding, foam molding or vacuum forming, more efficiently and more conspicuously as compared with the conventional techniques, that is, an ionomer resin having been improved in elongational viscosity can be provided. According to the present invention, moreover, a resin composition comprising the ionomer resin and a molded product which is obtained from the resin or the resin composition and is excellent in various properties can be provided.

Brief Description of Drawings

Fig. 1 is an example of a graph showing elongational viscosity curves of an ionomer resin used in the example of the present invention.

Fig. 2 is an example of a graph to determine a strain hardening exponent of an ionomer resin used in the example of the present invention.

Description of Embodiments

The present invention is described in detail hereinafter.

Ionomer resin (X1)

The ionomer resin (X1) of the present invention is a resin formed from the later-described olefin polymer (A) and metal salt (B). As described later in detail, from various properties (lowering of MFR, rise of elongational viscosity, appearance of strain hardening property, etc.) of the ionomer resin (X1) of the present invention, it is presumed that at least a part of the polymer (A) molecules forms a crosslinked structure through the metal salt (B).

(A) Olefin polymer having functional group (a) in molecule

In the present invention, the olefin polymer (also referred to as a "component (A)") having a functional group (a) in a molecule is an olefin polymer having constitutional units derived from an $\alpha$-olefin of 2 to 20 carbon atoms, preferably 3 to 20 carbon atoms, more preferably 3 to 10 carbon atoms, and having a functional group (a).

The olefin polymer (A) is, for example, a graft-modified product of the later-described olefin (co)polymer (A-1), and is obtained by graft-modifying the polymer (A-1) with a functional group-containing compound (graft monomer), such as a compound containing an acid or its derivative.

The weight-average molecular weight (Mw) of the olefin polymer (A) in the present invention is not specifically restricted and can be properly designed in the range of about 1000 to 1000000 according to the use purpose and the properties required. For example, in order to enhance fluidity, a low-molecular weight region is preferable, and in order to enhance mechanical strength, a high-molecular weight region is preferable.

In the following description, the olefin polymer having a functional group (a) in a molecule is sometimes referred to as a "functional group-containing olefin polymer". Moreover, the term "olefin (co)polymer" is used in a sense of a general term of a homopolymer of an olefin and a copolymer of olefines, and the same shall apply to the "(co)polymerization". The olefin (co)polymer (A-1) is described below, and thereafter, the graft modification is described.

(A-1) Olefin (co)polymer

Theolefin (co)polymer (A-1) employable in the present invention can be obtained by homopolymerizing or copolymerizing at least one selected from α-olefins of 2 to 20 carbon atoms, preferably 3 to 20 carbon atoms, more preferably 3 to 10 carbon atoms. As raw materials of the olefin (co) polymer (A-1), other compounds may be used together with the α-olefin.

Examples of such α-olefins include ethylene, propylene, butene-1, pentene-1, 2-methylbutene-1, 3-methylbutene-1, hexene-1, 3-methylpentene-1, 4-methylpentene-1, 3,3-dimethylpentene-1, heptene-1, methylhexene-1, dimethylpentene-1, trimethylbutene-1, ethylpentene-1, octene-1, methylpentene-1, dimethylhexene-1, trimethylpentene-1, ethylhexene-1, methylethylpentene-1, diethylbutene-1, propylpentene-1, decene-1, methylnonene-1, dimethyloctene-1, trimethylheptene-1, ethyloctene-1, methylethylheptene-1, diethylhexene-1, dodecene-1 and hexadodecene-1.

Of these, α-olefins of 3 to 10 carbon atoms are preferably used singly or in combination. More preferred uses of the α-olefins are uses of propylene alone, 4-methylpentene-1 alone, mixed α-olefins containing propylene as a main component and mixed α-olefins containing 4-methylpentene-1 as a main component. In the present invention, the "main component" is defined as a component whose concentration in all the α-olefins is not less than 30% by mol.

Accordingly, the olefin (co)polymer (A-1) preferably used in the present invention is a propylene polymer (propylene homopolymer, propylene copolymer) or a 4-methylpentene-1 polymer (4-methylpentene-1 homopolymer, 4-methylpentene-1 copolymer). The propylene copolymer is a copolymer of propylene and another α-olefin, which contains repeating units derived from propylene in an amount of usually not less than 50% by mol, preferably not less than 80% by mol, particularly preferably not less than 90% by mol, and contains repeating units derived from another α-olefin in the residual amount. The 4-methylpentene-1 copolymer is a copolymer of 4-methylpentene-1 and another α-olefin, which contains repeating units derived from 4-methylpentene-1 in an amount of usually not less than 50% by mol, preferably not less than 80% by mol, particularly preferably not less than 90% by mol, and contains repeating units derived from another α-olefin in the residual amount.

Examples of other compounds which can be used in addition to the α-olefins include a chain polyene compound and a cyclic polyene compound. These polyene compounds are polyenes having two or more conjugated or non-conjugated olefinic double bonds.

Examples of such chain polyene compounds include 1,4-hexadiene, 1,5-hexadiene, 1,7-octadiene, 1,9-decadiene, 2,4,6-octatriene, 1,3,7-octatriene, 1,5,9-decatriene and divinylbenzene.

Examples of the cyclic polyene compounds include 1,3-cyclopentadiene, 1,3-cyclohexadiene, 5-ethyl-1,3-cyclohexadiene, 1,3-cycloheptadiene, dicyclopentadiene, dicyclohexadiene, 5-ethylidene-2-norbornene, 5-methylene-2-norbornene, 5-vinyl-2-norbornene, 5-isopropylidene-2-norbornene, methylhydroindene, 2,3-diisopropylidene-5-norbornene, 2-ethylidene-3-isopropylidene-5-norbornene and 2-propenyl-2,5-norbornadiene.

In the production of the above olefin (co)polymer, a cyclicmonoenemaybe used. Examples of such cyclicmonoenes include:

monocycloalkenes, such as cyclopropene, cyclobutene, cyclopentene, cyclohexene, 3-methylcyclohexene, cycloheptene, cyclooctene, cyclodecene, cyclododecene, tetracyclodecene, octacyclodecene and cycloeicosene;
bicycloalkenes, such as norbornene, 5-methyl-2-noprbornene, 5-ethyl-2-norbornene, 5-isobutyl-2-norbornene, 5,6-dimethyl-2-norbornene, 5,5,6-trimethyl-2-norbornene and 2-bornene;
tricycloalkenes, such as 2,3,3a,7a-tetrahydro-4,7-methano-1H-indene and 3a,5,6,7a-tetrahydro-4,7-methano-1H-indene; and
1,4,5,8-dimethano-1,2,3,4,4a,5,8,8a-octahydronaphthalene.

In addition to the above compounds, there can be also mentioned other cyclic monoene compounds, for example, tetracycloalkenes, such as
2-methyl-1,4,5,8-dimethano-1,2,3,4,4a,5,8,8a-octahydronaphthalene,
2-ethyl-1,4,5,8-dimethano-1,2,3,4,4a,5,8,8a-octahydronaphthalene,
2-propyl-1,4,5,8-dimethano-1,2,3,4,4a,5,8,8a-octahydronaphthalen e,
2-hexyl-1,4,5,8-dimethano-1,2,3,4,4a,5,8,8a-octahydronaphthalene,
2-stearyl-1,4,5,8-dimethano-1,2,3,4,4a,5,8,8a-octahydronaphthale ne,
2,3-dimethyl-1,4,5,8-dimethano-1,2,3,4,4a,5,8,8a-octahydronaphth alene,
2-methyl-3-ethyl-1,4,5,8-dimethano-1,2,3,4,4a,5,8,8a-octahydrona phthalene,
2-chloro-1,4,5,8-dimethano-1,2,3,4,4a,5,8,8a-octahydronaphthalen e,
2-bromo-1,4,5,8-dimethano-1,2,3,4,4a,5,8,8a-octahydronaphthalene,
2-fluoro-1,4,5,8-dimethano-1,2,3,4,4a,5,8,8a-octahydronaphthalen e and
2,3-dichloro-1,4,5,8-dimethano-1,2,3,4,4a,5,8,8a-octahydronaphth alene; and
polycycloalkenes, such as

hexacyclo[6,6, 1, 1$^{3.6}$, 1$^{10.13}$, 0$^{2.7}$ 0$^{9.14}$] heptadecene-4, pentacyclo [8, 8, 1$^{2.9}$, 1$^{4.7}$, 1$^{11.18}$, 0,0$^{3.8}$, 0$^{12.17}$] heneicosene-5 and octacyclo [8, 8, 1$^{2.9}$, 1$^{4.7}$, 1$^{11.18}$ 1$^{13.16}$, 0, 0$^{3.8}$, 0$^{12.17}$] docosene-5.

Propylene polymer

The propylene polymer preferably used as the olefin (co) polymer (A-1) in the present invention is a propylene homopolymer, and any of isotactic, atactic and syndiotactic propylene homopolymer can be used. The propylene polymer may be a random or block copolymer of propylene and another olefin, such as ethylene, butene-1 or hexene-1, as long as properties as the propylene homopolymer are not impaired. Moreover, propylene polymers which are obtained by a process for industrially producing polyolefin, or propylene polymers which are widely commercially available can be also used without hindrance.

As a measure of the molecular weight of the propylene polymer, intrinsic viscosity can be used, and the intrinsic viscosity (represented by [η] "hereinafter), as measured in a tetralin solution at 135°C, is in the range of about 0.1 to 10 dl/g. The content of repeating units derived from another olefin in the propylene polymer is in the range of 0 to 50% by mol.

The catalyst used for polymerization in the process for producing the propylene polymer is, for example, a titanium trichloride catalyst, a catalyst comprising a co-catalyst component (e.g., alkylaluminum) and a catalyst component (e.g., catalyst component in which a titanium compound such as titanium trichloride or titanium tetrachloride is supported on a magnesium compound). Moreover, a catalyst comprising a periodic table group 3 or group 4 metal complex having a cyclopentadienyl compound as a ligand and an aluminoxane compound, such as a catalyst comprising a combination of dicyclopentadienyl zircomium dichloride and aluminoxane or a boron compound, or a homogeneous catalyst using, as a catalyst, a periodic table group 3 or group 4 metal cationic complex having a cyclopentadienyl compound as a ligand can be also utilized.

As the polymerization process, a conventional process, such as solvent polymerization, bulk polymerization wherein a solvent is not substantially present or gas phase polymerization, can be used. The polymerization conditions are not specifically restricted, and the polymerization is usually carried out under the conditions of a reaction temperature of ordinary temperature to 200°C and a pressure of normal pressure to 50 kgf/cm$^2$.

4-Methylpentene-1 polymer

The 4-methylpentene-1 polymer preferably used as the olefin (co)polymer (A-1) in the present invention is a homopolymer of 4-methylpentene-1 or a copolymer of 4-methylpentene-1 and an α-olefin other than 4-methylpentene-1. As the methylpentene polymer, any of isotactic, atactic and syndiotactic methylpentene polymers can be used.

The 4-methylpentene-1 polymer is preferably a polymer comprising 4-methylpentene-1 as a main component and containing repeating units derived from 4-methylpentene-1 in an amount of 85 to 100% by mol, preferably 90 to 100% by mol. Examples of α-olefines other than 4-methylpentene-1, which are copolymerizable with 4-methylpentene-1, include α-olefins of 2 to 20 carbon atoms, such as ethylene, propylene, 1-butene, 1-hexene, 1-octene, 1-decene, 1-tetradecene and 1-octadecene. Of these, 1-decence, 1-tetradecene and 1-octadecene are preferable because they have good copolymerizability with 4-methylpentene-1 and favorable toughness is obtained.

The melt flow rate (MFR) of the 4-methylpentene-1 polymer, as measured under the measuring conditions of a temperature of 260°C and a load of 5.0 kg in accordance with ASTM D1238, is in the range of preferably 0.5 to 200 g/10 min, more preferably 5 to 100g/10min, A melt flow rate of not more than 200 g/10 min is preferable because melt viscosity is sufficiently high and excellent moldability is obtained. On the other hand, a melt flow rate of not less than 0.5 g/10 min is preferable because sufficient mechanical strength is obtained. The melting point is in the range of preferably 220 to 240°C, more preferably 225 to 240°C.

The 4-methylpentene-1 polymer can be produced by a hitherto publicly known process, and it can be obtained by, for example, polymerizing 4-methylpentene-1 and the above α-olefin in the presence of a catalyst, as described in, for example, JP-A 1984-206418.

Functional group (a)

The functional group is a general term of atoms or atomic groups which give specific reactivity or function to compounds. Examples of the functional groups (a) contained in the component (A) include halogen group, hydroxyl group, thiol group, sulfide group, disulfide group, aldehyde group, acid group (e.g., carboxylic acid group, sulfonic acid group), acid derivative group such as acid anhydride group (e.g., carboxylic anhydride group, sulfonic anhydride group), amino group, imino group, epoxy group, nitrile group, nitro group, isocyanate group, thioisocyanate group, azo group and diazo group.

Of these, preferable is acid or acid anhydride; more preferable is carboxylic acid or carboxylic anhydride; and particularly preferable is maleic acid, Nadic acid (registered trademark) or an anhydride thereof. Moreover, sulfonic acid or sulfonic anhydride is also preferably used.

The acid group or the acid derivative group is a group derived from a compound containing an acid or its derivative (e.g., acid anhydride, imide, amide and ester of acid-containing compound), and in the present invention, the functional group is also sometimes referred to as an "acid" or "its derivative" simply. For example, the following examples of carboxylic acids and their derivatives mean groups derived from the compounds containing the acids or their derivatives, which are given as examples.

Examples of the carboxylic acids which can be contained in the component (A) include unsaturated carboxylic acids, such as maleic acid, fumaric acid, tetrahydrophthalic acid, itaconic acid, citraconic acid, crotonic acid, isocrotonic acid, Nadic acid (registered trademark), acrylic acid and methacrylic acid.

Examples of the carboxylic acid derivatives which can be contained in the component (A) include anhydrides, imides, amides and esters of the above mentioned unsaturated carboxylic acids. Specific examples of the derivatives include maleic anhydride, citraconic anhydride, maleimide, monomethyl maleate and glycidyl maleate.

Of these, unsaturated carboxylic acids or their anhdyrides are preferable, and maleic acid, Nadic acid (registered trademark) and anhydrides thereof are particularly preferable.

For introducing the functional group (a) into the olefin (co)polymer (A-1), there are (method 1) a method comprising graft-modifying the olefin (co) polymer (A-1) and (method 2) a method comprising allowing a carbon-carbon double bond portion derived from the diene monomer to react with an appropriate treating agent to introduce the functional group (a), when a structure attributable to a chain diene or a cyclic diene is contained in the olefin (co) polymer (A-1). Moreover, the following method 3 may be used. These methods are described below in detail with giving an example in which an acid or its derivative is introduced as the functional group (a).

Method 1: graft modification

For grafting a compound containing an acid or its derivative (referred to as a "graft monomer" hereinafter) onto the olefin (co) polymer (A-1), hitherto publicly known methods can be used without any restriction. For example, when a propylene polymer is used as the olefin (co) polymer (A-1), there can be used a melt modification method comprising melting the polymer and adding a graft monomer to the molten polymer to perform graft copolymerization, or a solution modification method comprising dissolving the polymer in a solvent and adding a graft monomer to the resulting solution to perform graft copolymerization.

For efficiently grafting the graft monomer onto the olefin (co)polymer (A-1) and thereby obtaining the functional group-containing olefin polymer (A), it is preferable to carry out the reaction in the presence of a radical initiator, and in this case, the graft reaction is carried out at a temperature of usually 60 to 350°C. The amount of the radical initiator used is in the range of usually 0.001 to 2 parts by weight based on 100 parts by weight of the olefin (co)polymer (A-1). Preferred examples of the radical initiators include organic peroxides, such as dicumyl peroxide, di-tert-butyl peroxide, 2,5-dimethyl-2,5-di(tert-butylperoxy)hexyne-3, 2,5-dimethyl-2,5-di(tert-butylperoxy)hexane, 1,4-bis(tert-butylperoxyisopropyl)benzene and t-butyl peroxybenzoate.

In the present invention, the functional group-containing olefin polymer used as the component (A) is preferably modified so that the content of the functional group (a) may become 0.01 to 50% by weight, preferably 0.05 to 40% by weight, more preferably 0.1 to 30% by weight. If the content of the functional group is less than the lower limit of the above range, strain hardening property that is one effect of the present invention is lowered, so that such a content is undesirable. In contrast therewith, if the content of the functional group is intended to be increased to more than the upper limit of the above range, decomposition reaction of the main chain-forming structure of the olefin polymer unavoidably occurs together with the graft reaction because of heat or the action of the radical initiator such as peroxide, and the molecular weight of the functional group-containing olefin polymer (A) is extremely lowered. Asa result, mechanical properties are markedly deteriorated or coloring takes place, so that such a content is undesirable.

Method 2: method comprising allowing carbon-carbon double bond portion contained in the olefin (co) polymer (A-1) to react with appropriate treating agent

When a double bond is contained in the olefin (co)polymer (A-1), a carboxylic acid or its derivative can be introduced into the polymer in accordance with the method described in JP-A 2006-137838. For example, maleic anhydride can be introduced in the following manner. That is to say, the olefin (co)polymer (A-1) is allowed to react with maleic anhydride under the acidic conditions. However, the carboxylic acid derivative introduced into the olefin (co) polymer (A-1) is not limited to the carboxylic anhydride.

When a double bond is contained in the olefin (co)polymer (A-1), sulfonic acid can be introduced into the polymer in accordance with the method described in JP-A 2006-137838. Using sulfuric acid-acetic anhydride, fuming sulfuric acid or the like as a reaction agent, the olefin (co)polymer (A-1) is allowed to undergo reaction to introduce the functional group.

Method 3: method comprising performing graft modification of the method 1 and then further allowing the polymer to react with appropriate treating agent to convert functional group

For example, there can be exemplified a method comprising performing the graft modification of the method 1, and then further allowing the grafted polymer to react with an aminosulfonic acid to convert the functional group into a sulfonic acid group. Examples of the aminosulfonic acids used herein include p-aminobenzenesulfonic acid (sulfanilic acid), m-aminobenzenesulfonic acid, o-aminobenzenesulfonic acid and 2-aminoethanesulfonic acid (taurine) . These aminosulfonic acids may be used singly or in combination of two or more kinds.

(B) Metal salt having two or more functional groups (b)

In the present invention, the metal salt (B) has two or more functional groups (b). The functional group (b) is a functional group capable of interacting with the functional group (a). That is to say, the metal salt (B) is a compound having, in a molecule, at least two sites (functional groups (b), also referred to as "reactive sites") capable of interacting (e.g., reacting) with the functional group (a) of the functional group-containing olefin polymer (A).

As inference has been stated previously, it is infered that by virtue of intermolecular actions, such as covalent bonding, ionic bonding, coordinate bonding and hydrogen bonding, at least a part of the functional group-containing olefin polymer (A) molecules forms a crosslinked structure through the metal salt (B) (also referred to as a "component (B)" hereinafter), whereby excellent properties of the present invention are exhibited.

The metal salt (B) is not specifically restricted as long as it has two or more functional groups (b), interacts (e. g. , reacts) with the functional group (a) having been introduced into the functional group-containing olefin polymer (A) and is presumed to accelerate molecular chain crosslinking of the polymer (A), no matter whether the reaction is reversible or irreversible. From the viewpoint that the molecular chain crosslinking can be accelerated, a metal salt containing a monovalent metal ion is preferable, and a metal salt containing potassium is particularly preferable, as shown in the examples.

As metal components used for producing an ionomer resin, metal compounds, such as metal oxides, metal hydroxides, metal salts and metal complexes of organic acids or inorganic acids, amino group-containing compounds, hydroxyl group-containing compounds and isocyanate group-containing compounds, have been hitherto known. Examples of the metal oxides include $CuO$, $MgO$, $BaO$, $ZnO$, $Al_2O_3$, $Fe_2O_3$, $SnO$, $CaO$, $TriO_2$ and $ZrO_2$. Examples of the metal hydroxides include $LiOH$, $NaOH$, $KOH$, $Cu(OH)_2$, $Cu_2O(OH)_2$, $Mg(OH)_2$, $MG_2O(OH)_2$, $Ba(OH)_2$, $Zn(OH)_2$, $Sn(OH)_2$ and $Ca(OH)_2$.

In the present Invention, a metal salt (B) having two or more functional groups (b) capable of interacting (reacting) with the functional group (a) is used among them. As the metal salt (B), a metal salt of an organic acid or an inorganic acid is preferable. That is to say, the functional group (b) contained in the metal salt (B) is preferably a group which have been formed by the neutralization of at least one selected from organic acid groups and inorganic acid groups with a metal component. The organic acid group refers to a functional group contained in an organic acid, such as a carboxyl group or a sulfo group, and the inorganic acid group refers to a functional group contained in an inorganic acid, such as a phosphoric acid group or a boric acid group.

Examples of the metal components (metal cations) in the metal salt include periodic table group I to group VIII metals, such as lithium, sodium, potassium, aluminum, zirconium, magnesium, calcium, barium, cesium, strontium, rubidium, titanium, zinc, copper, iron, tin and lead. Of these, sodium, potassium, magnesium, calcium, zirconium, zinc and aluminum are preferable, and from the viewpoint that the molecular chain crosslinking can be accelerated, sodium, potassium and the like that are monovalent metal cations are preferable, and potassium is particularly preferable.

As the organic acid metal salts, metal salts of organic acids such as stearic acid, acetic acid, carbonic acid, succinic acid, adipic acid, phthalic acid, isophthalic acid, terephthalic acid, iminodiacetic acid, citric acid, nitrilotriacetic acid, hemimellitic acid, trimellitic acid, trimesic acid, butanetetracarboxylic acid, ethylenediaminetetraacetic acid, mellophanic acid, prehnitic acid, pyropellitic acid, diethylenetriaminepentaacetic acid and mellitic acid have been hitherto known. In the present invention, organic acid metal salts having two or more reactive sites in a molecule are preferably used among them.

That is to say, succinate, iminodiacetate, citrate, nitrilotriacetate, ethylenediaminetetraacetate, diethylenetriaminepentaacetate and the like are preferably used. Examples of such organic acid metal salts include potassium succinate, potassium iminodiacetate, potassium citrate, potassium nitrilotriacetate, potassium ethyenediaminetetraacetate and potassium diethylenetriaminepentaacetate. These organic acid metal salts may be used singly or in combination of two or more kinds.

As the inorganic acid metal salts, metal salts of inorganic acids such as phosphoric acid, boric acid, nitric acid, hydrofluoric acid, hydrochloric acid, chromic acid, hydrobromic acid, hypochlorous acid and perchloric acid have been hitherto known. In the present invention, inorganic acid metal salts having two or more reactive sites are preferably used among them.

That is to say, inorganic acid metal salts having two or more phosphoric acid groups or boric acid groups are preferably used in the present invention because they are hardly vaporized and readily remain in the resin. These inorganic acid metal salts may be used singly or in combination of two or more kinds.

The amount of the metal salt (B) used is in the range of usually 0.01 to 100 parts by weight, preferably 0.05 to 50 parts by weight, particularly preferably 0.1 to 10 parts by weight, based on 100 parts by weight of the functional group-containing olefin polymer (A). If the amount thereof is less than 0.01 part by weight, the resulting ionomer resin tends to have low crosslink density and have insufficient strain hardening property. On the other hand, if the amount thereof exceeds 100 parts by weight, the resulting ionomer resin has too high crosslink density and thereby has markedly deteriorated melt flowability. As a result, molding processability is rather deteriorated, and besides, dispersibility of the metal salt in the resin is markedly deteriorated, resulting in a problem of bad appearance of the finally obtained molded product, so that such an amount is undesirable.

Resin composition (X2)

The resin composition (X2) of the present invention is obtained by mixing the above-mentioned ionomer resin (X1) with at least one olefin polymer (C) which is different from the functional group-containing olefin polymer (A).

(C) Olefin polymer

The olefin polymer (C) which can be used by mixing it with the ionomer resin (X1) obtained in the present invention is an olefin polymer having no functional group (a), differently from the olefin polymer (A). The olefin polymer (C) can be obtained by, for example, homopolymerizing or copolymerizing at least one selected from α-olefins of 2 to 20 carbon atoms.

Examples of such α-olefins include ethylene, propylene, butene-1, pentene-1, 2-methylbutene-1, 3-methylbutene-1, hexene-1, 3-methylpentene-1, 4-methylpentene-1, 3,3-dimethylpentene-1, heptene-1, methylhexene-1, dimethylpentene-1, trimethylbutene-1, ethylpentene-1, octene-1, methylpentene-1 dimethylhexene-1, trimethylpentene-1, ethylhexene-1, methylethylpentene-1, diethylbutene-1, propylpentene-1, decene-1, methylnonene-1, dimethyloctene-1, trimethylheptene-1, ethyloctene-1, methylethylheptene-1, diethylhexene-1, dodecene-1 and hexadodecene-1. Of these, α-olefins of 2 to 10 carbon atoms are preferably used singly or in combination of two or more kinds.

As the olefin polymer (C), a propylene polymer or a methylpentene polymer is particularly preferably used. Examples of the propylene polymers and the methylpentene polymers include the propylene polymers and the 4-methylpentene polymers described in the aforesaid section of "(A-1) Olefin (co)polymer".

The amount of the olefin polymer (C) which can be used by mixing it with the ionomer resin (X1) obtained in the present invention is in the range of usually 1 to 99%, preferably 20 to 95%, more preferably 50 to 90%, still more preferably 70 to 90%, in terms of weight fraction, based on the whole amount of the resin composition (X2) after mixing. The mixing ratio ((X1):(C)) between the ionomer resin (X1) and the olefin polymer (C) is in the range of usually 1:99 to 99:1, preferably 5:95 to 80:20, more preferably 10:90 to 50:50, still more preferably 10:90 to 30:70, in terms of weight fraction.

The olefin polymer (C) for use in the present invention contains repeating units derived from the α-olefin in an amount of usually not less than 50% by mol, preferably not less than 80% by may, particularly preferably 100% by mol.

Examples of other compounds which can be used in addition to the α-olefin include a chain polyene compound and a cyclic polyene compound. These polyene compounds are polyenes having two or more conjugated or non-conjugated olefinic double bonds.

Examples of such chain polyene compounds include 1,4-hexadiene, 1,5-hexadiene, 1,7-octadiene, 1,9-decadiene, 2,4,6-octatriene, 1,3,7-octatriene, 1,5,9-decatriene and divinylbenzene.

Examples of the cyclic polyene compounds include 1,3-cyclopentadiene, 1,3-cyclohexadiene, 5-ethyl-1,3-cyclohexadiene, 1,3-cycloheptadiene, dicyclopentadiene, dicyclohexadiene, 5-ethylidene-2-norbornene, 5-methylene-2-norbornene, 5-vinyl-2-norbornene, 5-isopropylidene-2-norbornene, methylhydroindene, 2,3-diisopropylidene-5-norbornene, 2-ethylidene-3-isopropylidene-5-norbornene and 2-propenyl-2,5-norbornadiene.

In the production of the olefin polymer, a cyclic monoene may be used. Examples of such cyclic monoenes include:

monocycloalkenes, such as cyclopropene, cyclobutene, cyclopentene, cyclohexene, 3-methylcyclohexene, cycloheptene, cyclooctene, cyclodecene, cyclododecene, tetracyclodecene, octacyclodecene and cycloeicosene; bicycloalkenes, such as norbornene, 5-methyl-2-noprbornene, 5-ethyl-2-norbornene, 5-isobutyl-2-norbornene, 5,6-dimethyl-2-norbornene, 5,5,6-trimethyl-2-norbornene and 2-bornene;

tricycloalkenes, such as
2,3,3a,7a-tetrahydro-4,7-methano-1H-indene and
3a,5,6,7a-tetrahydro-4,7-methano-1H-indene; and
1,4,5,8-dimethano-1,2,3,4,4a,5,8,8a-octahydronaphthalene.

In addition to the above compounds, there can be also mentioned other cyclic monoene compounds, for example, tetracycloalkenes, such as
2-methyl-1,4,5,8-dimethano-1,2,3,4,4a,5,8,8a-octahydronaphthalen e,
2-ethyl-1,4,5,8-dimethano-1,2,3,4,4a,5,8,8a-octahydronaphthalene, 2-propyl-1,4,5,8-di-methano-1,2,3,4,4a,5,8,8a-octahydronaphthalene,
2-hexyl-1,4,5,8-dimethano-1,2,3,4,4a,5,8,8a-octahydronaphthalene, 2-stearyl-1,4,5,8-dimethano-1,2,3,4,4a,5,8,8a-octahydronaphthale ne,
2,3-dimethyl-1,4,5,8-dimethano-1,2,3,4,4a,5,8,8a-octahydronaphth alene,
2-methyl-3-ethyl-1,4,5,8-dimethano-1,2,3,4,4a,5,8,8a-octahydrona phthalene,
2-chloro-1,4,5,8-dimethano-1,2,3,4,4a,5,8,8a-octahydronaphthalen e,
2-bromo-1,4,5,8-dimethano-1,2,3,4,4a,5,8,8a-octahydronaphthalene, 2-fluoro-1,4,5,8-dimethano-1,2,3,4,4a,5,8,8a-octahydronaphthalen e and
2,3-dichloro-1,4,5,8-dimethano-1,2,3,4,4a,5,8,8a-octahydronaphth alene; and
polycycloalkenes, such as
hexacyclo $[6,6,1,1^{3.6},11^{0.13},0^{2.7},0^{9.14}]$ heptadecene-4, pentacyclo $[8,8,1^{2.9},1^{4.7},11^{1.18}, 0,0^{3.8},0^{12.17}]$ heneicosene-5 and octacyclo$[8,8,1^{2.9},1^{4.7},1^{11.18},1^{13.16},0,0^{3.8},0^{12.17}]$docosene-5.

The weight-average molecular weight Mw of the olefin polymer (C) (in terms of polystyrene, in the case of propylene polymer: in terms of polypropylene), as measured by size exclusion chromatography, is in the range of usually 1000 to 5000000, preferably 10000 to 3000000.

Process for producing ionomer resin (X1) or resin composition (X2)

The ionomer resin (X1) of the present invention is obtained by, for example, melt kneading the functional group-containing olefin polymer (A) in the presence of the metal salt (B). The term "melt kneading" used herein refers to a process wherein shearing and heating are carried out simultaneously. Such melt kneading can be carried out by the use of, for example, a general melt kneading apparatus that is used for processing thermoplastic resins. The melt kneading apparatus may be an apparatus of batch type or continuous type. Examples of the melt kneading apparatuses include batch type melt kneading apparatuses, such as Banburymixer and kneader, and continuous type melt kneading apparatuses, such as co-rotating continuous twin-screw extruder.

As a method for mixing the ionomer resin (X1) with the olefin polymer (C), there can be mentioned (1) a method comprising melt kneading the ionomer resin (X1) obtained as above with the olefin polymer (C) and (2) a method comprising melt kneading the functional group-containing olefin polymer (A) and the olefin polymer (C) at the same time in the presence of the metal salt (B).

Any of the above two methods may be used. From the viewpoint that the crosslink density of the ionomer resin can be readily controlled, preferable is the method comprising first producing only the ionomer resin and thereafter melt kneading the ionomer resin (X1) with the olefin polymer (C). From the viewpoint of production cost, preferable is the method comprising melt kneading the functional group-containing olefin polymer (A) and the olefin polymer (C) at the same time in the presence of the metal salt (B).

The melt kneading is preferably carried out using a mixture comprising the functional group-containing olefin polymer (A), the metal salt (B), and if necessary, the olefin polymer (C), and specifically, the following methods (I) and (II) are available.

(1) Method comprising continuously melt kneading a mixture including the functional group-containing olefin polymer (A), the metal salt (B), and if necessary, the Olefin polymer (C) by the use of a twin-screw extruder.

(II) Method comprising melt kneading a mixture including the functional group-containing olefin polymer (A), the metal salt (B), and if necessary, the olefin polymer (C) by the use of a batch type kneader.

Although the melt kneading conditions vary depending upon the melting point or the glass transition temperature of the functional group-containing olefin polymer (A) used, the type of the metal salt (B), the type of the melt kneading apparatus, etc., the processing temperature is in the range of 200 to 300 °C, preferably 230 to 280°C, and the processing time is in the range of 30 seconds to 30 minutes, preferably 60 seconds to 10 minutes.

If the processing temperature is too low, the time required for sufficient reaction of the functional group-containing olefin polymer (A) with the metal salt (B) is prolonged, and this is a problem from the viewpoint of productivity.

In contrast therewith, if the processing temperature is too high, it becomes difficult to allow the functional group-containing olefin polymer (A) to homogeneously react with the metal salt (B), and the crosslink density of the finally obtained ionomer resin (X1) becomes extremely rough, particularly resulting in lowering of mechanical properties, so that such a temperature is undesirable. In order that preferred properties may be exhibited, therefore, optimum regions are present for both the processing temperature and the processing time.

The metal salt is preferably mixed in the form of a liquid, such as an aqueous solution, with the functional group-containing olefin polymer (A) and if necessary the olefin polymer (C). This is advantageous particularly in the case where the polymer (A) is an olefin polymer having been grafted with an acid anhydride. The reason is that water contained in the aqueous solution is used for hydrolyzing the acid anhydride into a dibasic acid.

To the ionomer resin (X1) or the resin composition (X2) of the present invention, various additives, such as flame retardant, heat stabilizer, oxidation stabilizer, weathering stabilizer, antistatic agent, lubricant and plasticizer, may be added if desired, within limits not detrimental to the effects of the present invention.

For molding the ionomer resin (X1) or the resin composition (X2) of the present invention into sheets, films or hollow bottles, publicly known various methods, such as extrusion method, injection molding, blow molding, press molding and casting, are applicable.

The melt flowability (i.e., MFR) of the ionomer resin (X1) of the present invention, which is an indication of an average molecular weight, is as follows. When the olefin (co) polymer (A-1) is a propylene polymer, MFR of the ionomer resin (X1), as measured at 230°C under a load of 2.16 kg, is in the range of 0.01 to 500 g/10 min, preferably 0.1 to 200 g/10 min, and when the olefin (co) polymer (A-1) is a 4-methylpentene-1 polymer, MFR of the ionomer resin (X1), as measured at 260 °C under a load of 5.0 kg, is in the range of 0.01 to 500 g/10 min, preferably 0.1 to 200 g/10 min.

The Young's modulus (tensile modulus) of the resin composition (X2) of the present invention, as determined by carrying out a tensile test under the conditions of 23°C and a pulling rate of 30 mm/min using a small specimen having a thickness of 1 mm in accordance with JIS K7113, is usually not less than 100 MPa, preferably not less than 300 MPa, more preferably not less than 500 MPa. Although the upper limit of the Young's modulus is not specifically restricted, it is usually about 4000 MPa.

The flexural modulus of the resin composition (X2) of the present invention, as determined by carrying out a three-point flexural test under the conditions of 23°C and a flexural rate of 5 mm/min using a specimen having a thickness of 3 mm in accordance with ASTM D-790, is usually not less than 100 MPa, preferably not less than 300 MPa, more preferably not less than 500 MPa. Although the upper limit of the flexural modulus is not specifically restricted, it is usually about 4000 MPa.

The Izod impact value of the resin composition (X2) of the present invention, as measured at 23°C using a notched specimen having a thickness of 3 mm in accordance with ASTM D-256, is usually not less than 10 J/m, preferably not less than 15 J/m, more preferably not less than 20 J/m. Although the upper limit of the Izod impact value is not specifically restricted, it is usually about 200 J/m.

The strain hardening exponent of the resin composition (X2) of the present invention, as evaluated by the use of a specimen having a thickness of 1mm in accordance with the method described in the later-described examples, is usually not less than 0.30, preferably not less than 0.40, more preferably not less than 0.50. Although the upper limit of the strain hardening exponent is not specifically restricted, it is usually about 10.

Molded product, etc.

The ionomer resin (X1) and the resin composition (X2) of the present invention have been improved in elongational viscosity. Since these resin compositions are excellent in chemical resistance, heat resistance, balance of mechanical properties, molding processability, dimensional stability, electrical insulation properties, low dielectric properties, lightweight properties, etc., molded products obtained from these resin and resin composition are favorably applied to various uses.

For example, the molded products can be effectively utilized as:

blow molded products produced by blow molding (bottles for beverages, bottles for detergents, bottles for cosmetics, bottles for coating materials, medical bottles for drugs and infusion solutions, bottles for miscellaneous goods, etc.); foamed products produced by foam molding (foamed sheets, containers for foods, bottle coveringmaterials, packaging materials, cushions for building materials, packaging materials for electronic parts, cushioning materials, heat insulating materials for high temperatures, automotive inner wall surface cushions, sound absorbing structures of cylinder head, timing belt cover, air cleaner, air duct, engine cover, air supply and exhaust resonator, screeningboardbetween engine room and room, trunk room and the like, foamed sheets for reflectors, foamed sheets for light diffusion panels, solar cell constitutional parts, heat insulating materials for cold insulation of water pipes, heat insulating materials for cold insulation of air conditioner pipes, etc.); injection molded products produced by injection molding (automotive interior or exterior trimparts, such as instrument panel, console box, glove box, arm rest, steering cowl, steering wheel pad, door trim, wheel cover, side protector, column cover, bumper, fascia, fender, air dam, air spoiler, molding, front grille, mud guard and pillar, exterior trim parts for household appliances and OA machines such as copy machine, facsimile, printer or combined machine of them, ink jet printer, scanner, shredder, personal computer, OHP machine, business printer, television, radio, stereophonic phonograph, air conditioner, refrigerator, washing machine and rice cooker, industrial transportation containers, such as pallet, tray and various containers, various container boxes, physical distribution materials, confectionary materials, poultry farming materials, egg trays, agricultural materials, baskets, sieves, barrels, drum cans, daily-use miscellaneous goods, drain boards, etc.);

films (multi-layer stretched films, multi-layer unstretched films, shrink films, protective films, retort films, porous films, barrier films, release films, polarizing plate protective films, retardation films, food packaging materials (wrapping films for microwave oven), etc.); and

others, such as foamed threads (raw threads for ropes, base cloth for carpets, cloth sheets, flexible container bags, tatami facings, Koki tatami borders, etc.), food packaging materials (fresh-keeping packaging materials, baking cartons, etc.), automotive exterior trim parts, automotive interior trim parts, roofs for building machines, tubes, electric wire coating materials, cable coating materials, rubber tack modifiers, gas-permeable packaging materials, buttery separators, reinforced fibers, liquid crystal display parts, release paper for synthetic leathers, resin molds for LED (light emitting diode), antenna materials, rubber hose mandrels and sheaths, harness connectors, resin modifiers, processing aids, heat-resistant coating materials in which the resin composition is dissolved in a hydrocarbon-based solvent, and waster-repellent materials.

In the foamed products, the open-cell ratio is usually not less than 50%, preferably 50 to 100%, the average diameter of cells is usually not less than 100 $\mu$m but not more than 1mm, preferably 100 $\mu$m to 500 $\mu$m, and the average diameter of holes by which cells are interconnected is usually not less than 100 nm, preferably 100 to 500 nm.

Examples

The present invention is further described with reference to the following examples, but it should be construed that the present invention is in no way limited to those examples. In the present invention, properties are measured by the following methods.

(1) Melt flow rate (MFR)

Melt flow rates (MFR) of various resin compositions weremeasured in the following manner. When a propylene polymer was used, the melt flow rate of the resin composition was measured under the conditions of a temperature of 230°C and a load of 2.16 kg in accordance with ASTM D1238, and when a 4-methylpentene-1 polymer was used, the melt flow rate of the resin composition was measured under the conditions of a temperature of 260°C and a load of 5.0 kg in accordance with ASTM D1238.

(2) Tensile properties (tensile modulus, elongation at break)

Tensile modulus and elongation at break were determined by carrying out a tensile test under the conditions of 23°C and a pulling rate of 30 mm/min in accordance with JIS K7113.

(3) Flexural properties (flexural modulus)

Flexural modulus was determined by carrying out a flexural test under the following conditions in accordance with ASTM D-790.
Specimen: 3mminthickness, span: 48 mm, flexural rate: 5 mm/min, measuring temperature: 23°C

(4) Impact properties (Izod impact value (IZ impact value))

IZ impact value was determined by carrying out an impact test under the following conditions in accordance with ASTM D-256.

Specimen: 3mm in thickness, notch: made by machining, measuring temperature: 23°C

(5) Strain hardening property(strain hardening exponent)

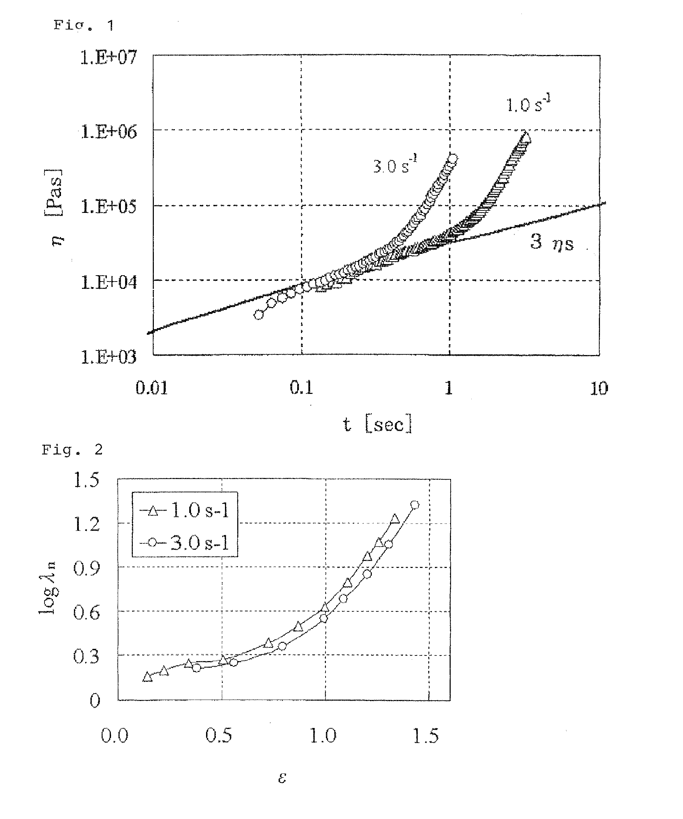

Elongational viscosities of various resin compositions were measured in the following manner using a viscoelasticity measuring apparatus (trade name: Physica MCR301) manufactured by Anton Parr. A specimen for property evaluation having a thickness of 1 mm was prepared from each resin composition, and as for this specimen, a relationship (elongational viscosity curve) between elongational viscosity $\eta$ (Pa·s) and time t (sec) at a given strain rate (sec$^{-1}$) was graphed. When a propylene polymer was used, the measuring temperature was 190°C, and when a 4-methylpentene-1 polymer was used, the measuring temperature was 240°C. An example (Example 2) of the measurement results is shown in Fig. 1.

On the other hand, viscosity given on the assumption that this resin composition has no strain hardening property was calculated in accordance with the linear viscoelasticity rule. In the calculation, shear viscosity was determined from frequency dispersion of melt viscoelasticity measured at the same temperature as in the elongational viscosity measurement.

From the above measurement results, a graph was made by plotting, on the abscissa, Hencky strain $\varepsilon$, and on the ordinate, ratio $\lambda_n$ between the actually measured elongational viscosity curve and the viscosity value obtained by the linear viscoelasticity rule. In the case where $\log\lambda_n$ values given when the Hencky stains $\varepsilon$ were 1. 0 and 1.5 were represented by $\log\lambda_n$ (1.0) and $\log\lambda_n$ (1.5), respectively, the stain cure index was determined by the following formula.

$$\text{Strain hardening exponent} = \frac{\log \lambda n(1.5) - \log \lambda n(1.0)}{1.5 - 1.0}$$

An example of the measurement results, that is, a result of the measurement on the pellets (a3) obtained in Example 2 is shown in Fig. 2.

(4) Size exclusion chromatography

Measurement by size exclusion chromatography (SEC) was carried out under the following conditions.
SEC: Alliance GPC2000 model manufactured by Waters Corporation
Column: two TSK gel GMH$_6$-HT available from Tosoh Corporation Amount of sample: 500 $\mu$l (polymer concentration: 0.15% by weight)
Flow rate: 1 ml/min
Temperature: 140°C
Solvent: o-dichlorobenzene
Using standard polystyrene available from Tosoh Corporation, a calibration curve of elution volume and molecular weight was prepared. Using the calibration curve, a weight-average molecular weight Mw and a number-average molecular weight Mn of a specimen in terms of polystyrene were determined. In some cases, Mw and Mn were determined in terms of polypropylene.

Functional group-containing olefin polymer (A) used

(1) MAH-modified isotactic propylene polymer

Maleic anhydride-modified isotactic propylene polymer (available from Mitsui Chemicals, Inc., trade name: Adomer Q-3000) having a maleic anhydride content of 0.4% by mol (0.6% by weight) and having a weight-average molecular weight Mw (in terms of polypropylene), as measured by size exclusion chromatography, of 92000
This polymer is sometimes abbreviated to "MAH-modified i-PP" hereinafter.

(2) MAH-modified isotactic 4-methylpentene-1 polymer

Maleic anhydride-modified isotactic 4-methylpentene-1 polymer (available from Mitsui Chemicals, Inc., trade name: MM104G) having a maleic anhydride content of 4.3% by mol (5.2% by weight) and having a weight-average molecular weight Mw (in terms of polystyrene), as measured by size exclusion chromatography, of 190000
This polymer is sometimes abbreviated to "MAH-modified i-TPX" hereinafter.

(3) Maleic anhydride-modified syndiotactic propylene polymer Synthesis of syndiotactic propylene polymer

In a reaction tank having an internal volume of 3. 0 m$^3$ and having been thoroughly purged with nitrogen, 1000 L of n-heptane was placed, and 610 ml (0.93 mol) of a toluene solution of methylaluminoxane (Al: 1.53 mol/L) was dropwise added at ordinary temperature. Separately, in a side arm flask having an internal volume of 5 L and having been thoroughly purged with nitrogen, a magnetic stirrer was placed. In the flask, 610 ml (0.93 mol) of a toluene solution of methylaluminoxane (Al: 1.53 mol/L) was introduced, and then a toluene solution of 1.30 g (1.86 mmol) of dibenzylmethylene(cyclopentadienyl)(2,7-diphenyl-3,6-di-tert-but ylfluorenyl)zirconium dichloride was introduced, followed by stirring for 20 minutes. The resulting solution was introduced into the reaction tank, and then 3200 NL of hydrogen was fed at 19 Nm$^3$/hr over a period of 10 minutes. Thereafter, with feeding propylene at 65 kg/hr, polymerization was initiated. With maintaining the gas phase concentration of hydrogen in the reaction tank at 53% by mol, propylene was continuously fed at 65 kg/hr, and the polymerization was carried out at 25°C for 4 hours. Thereafter, a small amount of diethylene glycol monoissopropyl ether was added to terminate the polymerization. The resulting polymer was washed with 1.8 m$^3$ of heptane and vacuum dried at 80°C for 15 hours. As a result, 100 kg of a polymer was obtained. The polymerization activity was 14 kg-PP/mmol-Zr·Hr, and the resulting polymer had [η] of 1.96 dl/g, a melting point Tm$_1$. of 152.8°C, Tm$_2$ of 159.3°C, as measured by DSC, MFR of 1.55 g/10 min, rrrr of 0.95 and an n-decane-soluble portion quantity of not more than measurable lower limit (0.5% by weight). The syndiotactic propylene polymer obtained as above is abbreviated to "s-PP" hereinafter.

Maleic acid modification of syndiotactic propylene polymer

100 Parts by weight of s-PP obtained as above were dryblended with a solution obtained by dissolving 1.5 parts by weight of maleic anhydride and 1. 5 parts by weight of t-butyl peroxybenzoate (available from Nippon Oil & Fats Co., Ltd., trade name: Perbutyl Z) in acetone. Thereafter, melt modification was carried out by the use of a twin-screw extruder (manufactured by Technovel Corporation, KZW15) under the conditions of a resin temperature of 180°C, a screw rotation speed of 200 rpm and a discharge rate of 25 g/min. During the extrusion, a radical initiator, a solvent and unreacted maleic anhydride were removed by vacuum degassing. The extruded strand in a molten state was cooled and then pelletized to obtain a maleic acid-modified syndiotactic propylene polymer (abbreviated to "MAH-modified s-PP" hereinafter) having an rrrr fraction of 0.92, a graft quantity (maleic anhydride content) of 0.6% by mol (0.9% by weight) and MFR of 91 g/10 min.

Olefin polymer (C) used

(1) Isotactic propylene polymer

Isotactic propylene polymer (available from Prime Polymer Co., Ltd., trade name: F102W) having a weight-average molecular weight Mw (in terms of polypropylene), as measured by size exclusion chromatography, of 450000 This polymer is sometimes abbreviated to "i-PP" hereinafter.

(2) Isotactic 4-methylpentene-1 polymer

Isotactic 4-methylpenterfe-1 polymer (available from Mitsui Chemicals, Inc., trade name: MX002) having a weight-average molecular weight Mw (in terms of polystyrene), as measured by size exclusion chromatography, of 630000
This polymer is sometimes abbreviated to "i-TPX" hereinafter.

(3) Syndiotactic propylene polymer

Syndiotactic propylene polymer "s-PP" obtained by the above synthesis

Ionomer resin (X1)

Comparative Example 1

As the component (A), 100 parts by weight of MAH-modified i-PP were used, and as the metal salt, 0.62 part by weight of potassium hydrogen carbonate was used. Using a twin-screw extruder having a diameter of 15 mm, they were melt mixed under the conditions of a cylinder temperature of 230°C, a die temperature of 230°C and a screw rotation speed of 200 rpm, followed by pelletizing the ionomer resin using a pelletizer. As for the potassium hydrogen carbonate, its aqueous solution having any concentration was prepared, and this aqueous solution was fed through a high-pressure pour zone provided independently from that for the component (A). From the resulting pellets (a1), a specimen for property evaluation having a thickness of 1 mm was prepared by the use of a compression press. The resulting pellets (a1) and specimen were subjected to evaluation of MFR and strain hardening property. The results are set forth in Table 1.

Example 1

Pellets (a2) and a specimen were obtained in the same manner as in Comparative Example 1, except that a metal salt in an amount shown in Table 1 was used as the metal salt (B). The pellets (a2) and the specimen were subjected to evaluation of properties. The results are set forth in Table 1.

Example 2

Pellets (a3) and a specimen were obtained in the same manner as in Comparative Example 1, except that a metal salt in an amount shown in Table 1 was used as the metal salt (B). The pellets (a3) and the specimen were subjected to evaluation of properties. The results are set forth in Table 1.

Comparative Example 2

Pellets (a4) were prepared in the same manner as in Comparative Example 1, except that 100 parts by weight of MAH-modified s-PP were used as the component (A) , 2. 00 parts by weight of potassium hydrogen carbonate were used as the metal salt, and the conditions of kneading with a twin-screw extruder were changed to a cylinder temperature of 200°C and a die temperature of 200°C. From the resulting pellets, a specimen for property evaluation having a thickness of 1 mm was prepared by the use of a compression press. The resulting pellets and specimen were subjected to evaluation of MFR and strain hardening property. The results are set forth in Table 1.

Example 3

Using 100 parts by weight of MAH-modified s-PP as the component (A) and using a metal salt in an amount shown in Table 1 as the metal salt (B), pellets (a5) were prepared in the samemanneras in Comparative Example 2. From the resulting pellets, a specimen for property evaluation having a thickness of 1 mm was prepared by the use of a compression press. The resulting pellets and specimen were subjected to evaluation of MFR and strain hardening property. The results are set forth in Table 1.

Example 4

Using 100 parts by weight of MAH-modified s-PP as the component (A) and using a metal salt in an amount shown in Table 1 as the metal salt (B), pellets (a6) were prepared in the same manner as in Comparative Example 2. From the resulting pellets, a specimen for property evaluation having a thickness or 1 mm was prepared by the use of a compression press. The resulting pellets and specimen were subj ected to evaluation of MFR and strain hardening property. The results are set forth in Table 1.

Comparative Example 3

Pellets (a7) were prepared in the same manner as in Comparative Example 1, except that 100 parts by weight of MAH-modified i-TPX were used as the component (A), 8.00 parts by weight of potassium hydrogen carbonate were used as the metal salt, and the conditions of kneading with a twin-screw extruder were changed to a cylinder temperature of 260°C and a die temperature of 260°C. From the resulting pellets, a specimen for property evaluation having a thickness of 1 mm was prepared by a compression press. The resulting pellets and specimen were subjected to evaluation of MFR and strain hardening property. The results are set forth in Table 1.

Example 5

Using 100 parts by weight of MAH-modified i-TPX as the component (A) and using a metal salt in an amount shown in Table 1 as the metal salt (B), pellets (a8) were prepared in the same manner as in Comparative Example 3. From the resulting pellets, a specimen for property evaluation having a thickness of 1 mm was prepared by the use of a compression press. The resulting pellets and specimen were subj ected to evaluation of MFR and strain hardening property. The results are set forth in Table 1.

Example 6

Using 100 parts by weight or MAH-modified i-TPX as the component (A) and using a metal salt in an amount shown in Table 1 as the metal salt (B), pellets (a9) were prepared in the same manner as in Comparative Example 3. From the resulting pellets, a specimen for property evaluation having a thickness of 1 mm was prepared by the use of a compression press. The resulting pellets and specimen were subj ected to evaluation of MFR and strain hardening property. The results are set forth in Table 1.

Table 1

| | Functional group-containing olefin polymer (A) | Metal salt (B) | | Properties | |
|---|---|---|---|---|---|
| | | Type | Amount (phr) | MFR (dg/min) | Strain hardening exponent |
| Comp. Ex. 1 | MAH-modified i-PP | potassium hydrogen carbonate | 0.62 | 2.7 | 1.1 |
| Ex. 1 | " | potassium succinate | 0.75 | 1.5 | 1.7 |
| Ex. 2 | " | ethylenediaminetetraacetic acid potassium salt | 0.45 | 1.0 | 1.8 |
| Comp. Ex. 2 | MAH-modified s-PP | potassium hydrogen carbonate | 2.00 | 8.0 | 1.1 |
| Ex. 3 | " | potassium succinate | 2.40 | 4.2 | 1.5 |
| Ex. 4 | " | ethylenediaminetetraacetic acid potassium salt | 1.45 | 4.0 | 1.5 |
| Comp. Ex. 3 | MAH-modified i-TPX | potassium hydrogen carbonate | 8.00 | 1.6 | 1.2 |
| Ex. 5 | " | potassium succinate | 9.70 | 1.0 | 1.7 |
| Ex. 6 | " | ethylenediaminetetraacetic acid potassium salt | 5.80 | 0.8 | 1.8 |

Resin composition (X2)

Comparative Examples 4

As the component (C), i-PP was used, and as the ionomer resin (X1), the pellets (a1) of the ionomer resin obtained in Comparative Example 1 were used. They were compounded so that the weight ratio would become 80/20 (i-PP/ionomer resin), and using a twin-screw extruder having a diameter of 15 mm, they were melt mixed under the conditions of a cylinder temperature of 230°C, a die temperature of 230°C and a screw rotation speed of 200 rpm, followed by pelletizing using a pelletizer. From the resulting pellets, specimens for evaluation of various properties were prepared by injection molding (following conditions (1)). The resulting pellets and specimens were subjected to evaluation of tensile properties, flexural properties, impact properties and strain hardening property. The results are set forth in Table 2.

Example 7

Pelletizing of a mixture of the olefin polymer (C) and the ionomer resin (X1) was carried out in the same manner as in Comparative Example 4, except that the pellets (a2) of the ionomer resin obtained in Example 1 were used as the ionomer resin (X1). From the resulting pellets, specimens for evaluation of various properties were prepared by injection molding (following conditions (1)). The resulting pellets and specimens were subjected to evaluation of tensile properties, flexural properties, impact properties and strain hardening property. The results are set forth in Table 2.

Example 8

Pelletizing of a mixture of the olefin polymer (C) and the ionomer resin (X1) was carried out in the same manner as in Comparative Example 4, except that the pellets (a3) of the ionomer resin obtained in Example 2 were used as the ionomer resin (X1). From the resulting pellets, specimens for evaluation of various properties were prepared by injection molding (following conditions (1)). The resulting pellets and specimens were subjected to evaluation of tensile properties, flexural properties, impact properties and strain hardening property. The results are set forth in Table 2.

Injection molding conditions (1)

Molding machine : 20-ton injection molding machine manufactured by Nissei Plastic Industrial Co., Ltd.
Screw temperature: 230°C
Mold temperature: 40°C

Comparative Example 5

As the component (C), s-PP was used, and as the ionomer resin, the pellets (a4) of the ionomer resin obtained in Comparative Example 2 were used. They were compounded so that the weight ratio would become 80/20 (s-PP/ ionomer resin), and using a twin-screw extruder having a diameter of 15 mm, they were melt mixed under the conditions of a cylinder temperature of 200°C, a die temperature of 200°C and a screw rotation speed of 200 rpm, followed by pelletizing using a pelletizer. From the resulting pellets, specimens for evaluation of various properties were prepared by injection molding (following conditions (2)). The resulting pellets and specimens were subjected to evaluation of tensile properties, flexural properties, impact properties and strain hardening property. The results are set forth in Table 2.

Example 9

Pelletizing of a mixture of the olefin polymer (C) and the ionomer resin (X1) was carried out in the same manner as in Comparative Example 5, except that the pellets (a5) of the ionomer resin obtained in Example 3 were used as the ionomer resin (X1). From the resulting pellets, specimens for evaluation of various properties were prepared by injection molding (following conditions (2)). The resulting pellets and specimens were subjected to evaluation of tensile properties, flexural properties, impact properties and strain hardening property. The results are set forth in Table 2.

Example 10

Pelletizing of a mixture of the olefin polymer (C) and the ionomer resin (X1) was carried out in the same manner as in Comparative Example 5, except that the pellets (a6) of the ionomer resin obtained in Example 4 were used as the ionomer resin (X1). From the resulting pellets, specimens for evaluation of various properties were prepared by injection molding (following conditions (2)). The resulting pellets and specimens were subjected to evaluation of tensile properties, flexural properties, impact properties and strain hardening property. The results are set forth in Table 2.

Injection molding conditions (2)

Molding machine : 20-ton injection molding machine manufactured by Nissei Plastic Industrial Co., Ltd.
Screw temperature: 200°C
Mold temperature: 40°C

Comparative Example 6

As the component (C), i-TPX was used, and as the ionomer resin, the pellets (a7) of the ionomer resin obtained in Comparative Example 3 were used. They were compounded so that the weight ratio would become 80/20 (i-TPX/ ionomer resin), and using a twin-screw extruder having a diameter of 15 mm, they were melt mixed under the conditions of a cylinder temperature of 260°C, a die temperature of 260°C and a screw rotation speed of 200 rpm, followed by pelletizing using a pelletizer. From the resulting pellets, specimens for evaluation of various properties were prepared by injection molding (following conditions (3)). The resulting pellets and specimens were subjected to evaluation of tensile properties, flexural properties, impact properties and strain hardening property. The results are set forth in Table 2.

Example 11

Pelletizing of a mixture of the olefin polymer (C) and the ionomer resin (X1) was carried out in the same manner as in Comparative Example 6, except that the pellets (a8) of the ionomer resin obtained in Example 5 were used as the ionomer resin (X1). From the resulting pellets, specimens for evaluation of various properties were prepared by injection molding (following conditions (3)). The resulting pellets and specimens were subjected to evaluation of tensile properties, flexural properties, impact properties and strain hardening property. The results are set forth in Table 2.

Example 12

Pelletizing of a mixture of the olefin polymer (C) and the ionomer resin (X1) was carried out in the same manner as in Comparative Example 6, except that the pellets (a9) of the ionomer resin obtained in Example 6 were used as the ionomer resin (X1). From the resulting pellets, specimens for evaluation of various properties were prepared by injection molding (following conditions (3)). The resulting pellets and specimens were subjected to evaluation of tensile properties, flexural properties, impact properties and strain hardening property. The results are set forth in Table 2.

Injection molding conditions (3)

Molding machine: 20-ton injection molding machine manufactured by Nissei Plastic Industrial Co., Ltd.
Screw temperature: 280°C
Mold temperature: 60°C

Comparative Example 7

Pelletizing and preparation of specimens by injection molding were carried out in the same manner as in Comparative Example 4, except that the ionomer resin was not used. Then, properties were evaluated. The results are set forth in Table 2.

Comparative Example 8

Pelletizing and preparation of specimens by injection molding were carried out in the same manner as in Comparative Example 4, except that MAH-modified i-PP was used instead of the ionomer resin. Then, properties were evaluated. The results are set forth in Table 2.

Comparative Example 9

Pelletizing and preparation of specimens by injection molding were carried out in the same manner as in Comparative Example 4, except that an ethylene ionomer resin (available from DuPont-Mitsui Polychemicals Co., Ltd.., trade name: Highmilan 1554, melt kneadate of ethylene/methacrylic acid copolymer and metal salt having one functional group (b)) was used as the ionomer resin. Then, properties were evaluated. The results are set forth in Table 2.

Comparative Example 10

Pelletizing and preparation of specimens by injection molding were carried out in the same manner as in Comparative Example 4, except that an electron ray-crosslinked polypropylene resin (available from SunAllomer Ltd., PF-814) was used instead of the ionomer resin. Then, properties were evaluated. The results are set forth in Table 2.

Comparative Example 11

Pelletizing and preparation of specimens by injection molding were carried out in the same manner as in Comparative Example 5, except that the ionomer resin was not used. Then, properties were evaluated. The results are set forth in Table 2.

Comparative Example 12

Pelletizing and preparation of specimens by injection molding were carried out in the same manner as in Comparative Example 5, except that MAH-modified s-PP was used instead of the ionomer resin. Then, properties were evaluated. The results are set forth in Table 2.

Comparative Example 13

Pelletizing and preparation of specimens by injection molding were carried out in the same manner as in Comparative Example 5, except that an ethylene ionomer resin (available from DuPont-Mitsui Polychemicals Co., Ltd., trade name: Highmilan 1554) was used as the ionomer resin. Then, properties were evaluated. The results are set forth in Table 2.

Comparative Example 14

Pelletizing and preparation of specimens by injection molding were carried out in the same manner as in Comparative Example 6, except that the ionomer resin was not used. Then, properties were evaluated. The results are set forth in Table 2.

Comparative Example 15

Pelletizing and preparation of specimens by injection molding were carried out in the same manner as in Comparative Example 6, except that MAH-modified i-TPX was used instead of the ionomer resin. Then, properties were evaluated. The results are set forth in Table 2.

Table 2

| | Olefin polymer (C) | | Ionomer resin (X1) | | Properties | | | | |
|---|---|---|---|---|---|---|---|---|---|
| | Type | % by weight | Type | % by weight | Strain hardening exponent | Tensile modulus (MPa) | Elongation at break (%) | Flexural modulus (MPa) | 23°C IZ impact value (J/m) |
| Comp. Ex. 4 | i-PP | 80 | a1 | 20 | 0.6 | 1600 | 500 | 2050 | 30 |
| Ex. 7 | " | 80 | a2 | 20 | 1.1 | 1590 | 450 | 1850 | 35 |
| Ex. 8 | " | 80 | a3 | 20 | 1.2 | 1550 | 550 | 1850 | 36 |
| Comp. Ex. 5 | S-PP | 80 | a4 | 20 | 0.4 | 960 | 420 | 790 | 75 |
| Ex. 9 | " | 80 | a5 | 20 | 0.7 | 975 | 370 | 760 | 80 |
| Ex. 10 | " | 80 | a6 | 20 | 0.7 | 950 | 450 | 770 | 82 |
| Comp. Ex. 6 | i-TPX | 80 | a7 | 20 | 0.9 | 710 | 71 | 720 | 31 |
| Ex. 11 | " | 80 | a8 | 20 | 1.3 | 690 | 64 | 720 | 31 |
| Ex. 12 | " | 80 | a9 | 20 | 1.4 | 700 | 76 | 730 | 32 |
| Comp. Ex. 7 | i-PP | 100 | - | 0 | 0.0 | 1400 | 760 | 1500 | 41 |
| Comp. Ex. 8 | " | 80 | MAH-modified i-PP | 20 | 0.0 | 1500 | 400 | 1600 | 20 |
| Comp. Ex. 9 | " | 80 | Highmilan 1554 | 20 | 0.5 | 1200 | 150 | 1200 | 12 |
| Comp. Ex. 10 | " | 80 | Electron ray-crosslinked i-PP | 20 | 1.2 | 1400 | 250 | 1400 | 22 |

(continued)

| | Olefin polymer (C) | | Ionomer resin (X1) | | Properties | | | | |
|---|---|---|---|---|---|---|---|---|---|
| | Type | % by weight | Type | % by weight | Strain hardening exponent | Tensile modulus (MPa) | Elongation at break (%) | Flexural modulus (MPa) | 23°C IZ impact value (J/m) |
| Comp. Ex. 11 | s-PP | 100 | - | 0 | 0.0 | 830 | 600 | 600 | 90 |
| Comp. Ex. 12 | " | 80 | MAH-modified s-PP | 20 | 0.0 | 860 | 350 | 640 | 55 |
| Comp. Ex. 13 | " | 80 | Highmilan 1554 | 20 | 0.6 | 640 | 150 | 480 | 40 |
| Comp. Ex. 14 | i-TPX | 100 | - | 0 | 0.0 | 660 | 60 | 700 | 25 |
| Comp. Ex. 15 | " | 80 | MAH-modified i-TPX | 20 | 0.0 | 670 | 52 | 690 | 27 |

In Table 1, the values of strain hardening exponent (MFR) become larger (in the case of MFR: smaller) in order of Comparative Example 1, Example 1 and Example 2. The reason is thought to be that the metal salt used in Comparative Example 1 had, in a molecule, only one site (reactive site) capable of interacting (reacting) with the maleic anhydride group introduced into the MAH-modified i-PP, but the metal salt (B) used in Examples 1 and 2 had, in a molecule, two or more reactive sites, and therefore, crosslinking efficiency of the MAH-modified i-PP increased. The same tendency was observed in comparison among Comparative Example 2, Example 3 and Example 4 and in comparison among Comparative Example 3, Example 5 and Example 6.

In Table 2, strain hardening exponent, tensile modulus, elongation at break, flexural modulus and Izod impact strength in Comparative Example 4, Example 7 and Example 8 are higher than those in Comparative Example 9. The reason is thought to be that in Comparative Example 4, Example 7 and Example 8, the ionomer resin and the i-PP had high compatibility and they were compatible with each other, though the ionomer resin and the i-PP had low compatibility and they underwent phase separation in Comparative Example 9.

That the property values of Examples 9 and 10 are superior to those of Comparative Example 13 is thought to be attributable to difference in compatibility of the s-PP with the ionomer resin, similarly to the above.

In Table 2, strain hardening exponent, tensile modulus, flexural modulus and Izod impact value in Comparative Example 4, Example 7 and Example 8 are higher than those in Comparative Example 8. This is thought to be attributable to that the ionomer resin added in Comparative Example 4, Example 7 and Example 8 was a crosslinked product though the MAH-modified i-PP added in Comparative Example 8 was an uncrosslinked product.

The same tendency was clearly observed in comparison of Examples 9 and 10 with Comparative Example 12 and in comparison of Examples 11 and 12 with Comparative Example 15.

In comparison of Comparative Example 4 and Examples 7 and 8 with Comparative Example 10 in Table 2, tensile modulus, elongation at break, flexural modulus and Izod impact value of Comparative Example 4 and Examples 7 and 8 are higher than those of Comparative Example 10 though strain hardening exponent is equivalent. The reason is not clear, but this is presumed to be attributable to that the compatibility of the electron ray-crosslinked i-PP added in Comparative Example 10 with the i-PP was lower than the compatibility of the ionomer resin used in Comparative Example 4 and Examples 7 and 8 with the i-PP.

Industrial Applicability

The ionomer resin (X1) and the resin composition (X2) of the present invention are excellent in chemical resistance, heat resistance, balance of mechanical properties, molding processability, dimensional stability, electrical insulation properties, low dielectric properties, lightweight properties, etc., and therefore, they can be effectively utilized as raw materials of various molded products.

**Claims**

1. An ionomer resin (X1) formed from 100 parts by weight of (A) an olefin polymer having constitutional units derived from an $\alpha$-olefin of 2 to 20 carbon atoms and having a functional group (a) and 0.01 to 100 parts by weight of (B) a metal salt having two or more functional groups (b).

2. The ionomer resin (X1) as claimed in claim 1, wherein the functional group (a) is an acid group or an acid anhydride group.

3. The ionomer resin (X1) as claimed in claim 1 or 2, wherein the functional groups (b) have been formed by the neutralization of at least one selected from organic acid groups and inorganic acid groups with a metal component.

4. The ionomer resin (X1) as claimed in any one of claims 1 to 3, wherein the polymer (A) is a graft-modified product of an olefin (co)polymer (A-1) obtained by (co)polymerizing at least one selected from $\alpha$-olefins of 2 to 20 carbon atoms.

5. The ionomer resin (X1) as claimed in claim 4, wherein the olefin (co) polymer (A-1) is a propylene polymer in which the content of repeating units derived from propylene is not less than 50% by mol.

6. The ionomer resin (X1) as claimed in claim 4, wherein the olefin (co) polymer (A-1) is a 4-methylpentene-1 polymer in which the content of repeating units derived from 4-methylpentene-1 is not less than 50% by mol.

7. The ionomer resin (X1) as claimed in any one of claims 1 to 6, wherein the content of the functional group (a) in the polymer (A) is in the range of 0.01 to 50% by weight.

8. A resin composition (X2) obtained by mixing the ionomer resin (X1) as claimed in any one of claims 1 to 7 with at least one olefin polymer (C) which is different from the polymer (A).

9. The resin composition (X2) as claimed in claim 8, which is obtained by mixing the ionomer resin (X1) with the olefin polymer (C) in a ratio of 1:99 to 99:1 ((X1):(C), % by weight).

10. The resin composition (X2) as claimed in claim 8 or 9, wherein the polymer (C) is a homopolymer obtained by homopolymerizing an $\alpha$-olefin of 2 to 20 carbon atoms or a copolymer obtained by copolymerizing two or more different $\alpha$-olefins of 2 to 20 carbon atoms.

11. The resin composition (X2) as claimed in any one of claims 8 to 10, wherein the weight fraction of the polymer (C) is in the range of 1 to 99% by weight.

12. A molded product obtained from the ionomer resin (X1) as claimed in any one of claims 1 to 7 or the resin composition (X2) as claimed in any one of claims 8 to 11.

13. A blow molded product obtained from the ionomer resin (X1) as claimed in any one of claims 1 to 7 or the resin composition (X2) as claimed in any one of claims 8 to 11.

14. A foamed product obtained from the ionomer resin (X1) as claimed in any one of claims 1 to 7 or the resin composition (X2) as claimed in any one of claims 8 to 11.

15. The foamed product as claimed in claim 14, wherein the open-cell ratio is not less than 50%, the average diameter of cells is not less than 100 $\mu$m but not more than 1 mm, and the average diameter of holes by which cells are interconnected is not less than 100 nm.

16. An injection molded product obtained from the ionomer resin (X1) as claimed in any one of claims 1 to 7 or the resin composition (X2) as claimed in any one of claims 8 to 11.

17. A film obtained from the ionomer resin (X1) as claimed in any one of claims 1 to 7 or the resin composition (X2) as claimed in any one of claims 8 to 11.

Fig. 1

Fig. 2

## INTERNATIONAL SEARCH REPORT

| | International application No. |
|---|---|
| | PCT/JP2009/064853 |

### A. CLASSIFICATION OF SUBJECT MATTER

*C08L23/26*(2006.01)i, *B29C45/00*(2006.01)i, *B29C49/00*(2006.01)i, *C08J5/18*
(2006.01)i, *C08J9/00*(2006.01)i, *C08K3/00*(2006.01)i, *C08K5/00*(2006.01)i,
*C08L23/00*(2006.01)i, *B29K23/00*(2006.01)n, *B29K96/02*(2006.01)n,

According to International Patent Classification (IPC) or to both national classification and IPC

### B. FIELDS SEARCHED

Minimum documentation searched (classification system followed by classification symbols)
C08L23/26, B29C45/00, B29C49/00, C08J5/18, C08J9/00, C08K3/00, C08K5/00,
C08L23/00, B29K23/00, B29K96/02, B29K105/04

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br><br>A | JP 60-099148 A (Showa Denko Kabushiki Kaisha),<br>03 June 1985 (03.06.1985),<br>claims; page 1, right column, lines 6 to 13;<br>page 3, upper right column, 2nd line from the<br>bottom to lower left column, line 10; page 3,<br>upper left column, lines 1 to 14; examples<br>(Family: none) | 1-5,7-13,16,<br>17<br>6,14,15 |
| X<br>A | JP 2008-163331 A (Bridgestone Sports Co., Ltd.),<br>17 July 2008 (17.07.2008),<br>claims; paragraphs [0040] to [0046]; examples<br>& US 2008/0161456 A1 | 1-4,7-12,16<br>5,6,13-15,17 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 November, 2009 (05.11.09) | 17 November, 2009 (17.11.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/064853 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>A | JP 2001-515529 A (E.I. Du Pont De Nemours &<br>Co.),<br>18 September 2001 (18.09.2001),<br>claims; page 20, lines 8 to 15; page 22, lines<br>15 to 21; examples<br>& US 5789475 A          & US 5973046 A<br>& US 5789475 A          & EP 961790 A<br>& WO 1998/036003 A1      & DE 69821218 D<br>& DE 69821218 T          & CA 2279503 A | 1-3,7-12,17<br>4-6,13-16 |
| A | JP 03-059053 A (Mitsui Petrochemical<br>Industries, Ltd.),<br>14 March 1991 (14.03.1991),<br>claims; entire text<br>(Family: none) | 1-17 |
| A | JP 48-058043 A (Nitto Electric Industrial Co.,<br>Ltd.),<br>15 August 1973 (15.08.1973),<br>claims; entire text<br>(Family: none) | 1-17 |
| A | JP 48-070757 A (Asahi Dau Kabushiki Kaisha),<br>25 September 1973 (25.09.1973),<br>claims; entire text<br>(Family: none) | 1-17 |
| A | JP 07-278597 A (Kao Corp.),<br>24 October 1995 (24.10.1995),<br>claims; entire text<br>(Family: none) | 1-17 |
| A | JP 03-149238 A (Kuraray Co., Ltd.),<br>25 June 1991 (25.06.1991),<br>claims; entire text<br>(Family: none) | 1-17 |

Form PCT/ISA/210 (continuation of second sheet) (April 2007)

| INTERNATIONAL SEARCH REPORT | International application No. |
|---|---|
| | PCT/JP2009/064853 |

Continuation of A. CLASSIFICATION OF SUBJECT MATTER
  (International Patent Classification (IPC))

*B29K105/04*(2006.01)n

   (According to International Patent Classification (IPC) or to both national
   classification and IPC)

<table>
<tr><td>**INTERNATIONAL SEARCH REPORT**</td><td>International application No.<br>PCT/JP2009/064853</td></tr>
</table>

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III       Observations where unity of invention is lacking (Continuation of item 3 of first sheet)**

This International Searching Authority found multiple inventions in this international application, as follows:

        See extra sheet

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

**INTERNATIONAL SEARCH REPORT**

International application No.

PCT/JP2009/064853

Continuation of Box No.III of continuation of first sheet(2)

The "ionomer resin" set forth in claim 1 is disclosed in the following documents 1-3, is therefore not novel, and has no special technical feature.

Document 1: JP 60-099148 A (Showa Denko Kabushiki Kaisha), 03 June 1985 (03.06.1985), claims; page 1, right column, lines 6-13; page 3, upper right column, line 2 from the bottom to lower left column, line 10; page 3, upper left column, lines 1-14; example (Family: none)
Document 2: JP 2008-163331 A (Bridgestone Sports Co., Ltd.), 17 July 2008 (17.07.2008), claims, paragraphs [0040]-[0046], example & US 2008/0161456 A1
Document 3: JP 2001-515529 A (E.I. Du Pont De Nemours & Co.), 18 September 2001 (18.09.2001), claims; page 20, lines 8-15; page 22, lines 15-21; example & US 5789475 A & US 5973046 A & US 5789475 A & EP 961790 A & WO 1998/036003 A1 & DE 69821218 D & DE 69821218 T & CA 2279503 A

Thus, the inventions of claims 1-17 have no common special technical feature, and are therefore not considered as being so linked as to from a single general inventive concept.
The inventions of claims 1-17 include the following 3 inventions which are each linked by a special technical feature.
The inventions of claims 1-5 and 7 which have no special technical feature are classified as Invention 1.

(Invention 1) the inventions of claims 1-5, an invention of claim 7 which refers to claim 5; and inventions of claims 8-13, 16 and 17 which are not classified as Invention 2
An invention relating to an ionomer resin (X1) "wherein the olefin (co)polymer (A-1) is a propylene polymer comprising 50 molar % or more of repeating units derived from propylene".
(Invention 2) the invention of claim 6, an invention of claim 7 which refers to claim 6; and inventions of claims 8-13, 16 and 17 which refer to claim 6.
An invention relating to an ionomer resin (X1) "wherein the olefin (co)polymer (A-1) is a 4-methylpentene-1 polymer comprising 50 molar % or more of repeating units derived from 4-methylpentene-1"
(Invention 3) the inventions of claims 14 and 15
An invention relating to "a foam prepared from the resin composition (X2)".

When an invention can be classified as two or more groups described above, the invention is regarded as belonging to the earliest group among the groups.

**EP 2 322 574 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 19646810 B
- JP 196515769 B
- JP 5079683 B
- JP 59093711 A
- JP 61152754 A
- JP 62121704 A
- JP 2002543251 T
- JP 2006521424 T
- JP 59206418 A
- JP 2006137838 A